Europäisches Patentamt

European Patent Office

Office européen des brevets

(11) Publication number: **0 514 956 A1**

# EUROPEAN PATENT APPLICATION

(21) Application number: **92200966.7**

(22) Date of filing: **03.04.92**

(51) Int. Cl.5: **G08B 15/00**, G06K 7/08

(30) Priority: **05.04.91 NL 9100594**

(43) Date of publication of application:
**25.11.92 Bulletin 92/48**

(84) Designated Contracting States:
**AT BE CH DE DK ES FR GB IT LI LU NL SE**

(71) Applicant: **INTEGRATED ENGINEERING HOLDING B.V.**
**Standerdmolen 8**
**NL-3995 AA Houten(NL)**

(72) Inventor: **Meester, Jozef Hyacinthus Maria**
**c/o. Integrated Engineering B.V. Postbus 315**
**NL-3990 GC Houten(NL)**

(74) Representative: **Land, Addick Adrianus Gosling et al**
**OCTROOIBUREAU ARNOLD & SIEDSMA**
**Sweelinckplein 1**
**NL-2517 GK Den Haag(NL)**

(54) **Identification system.**

(57) A system for identification (1) comprising:
- a fixedly disposed reading part (2) which is provided with a channel (3) which is open on one side and in which are received reading elements (9) making use of the Hall effect;
- a separate carrier part (4), the width of which is substantially the same as the width of the channel, which is to be contacted with the channel in a first direction, which is subsequently to be moved along said channel in a second direction substantially perpendicular to said first direction and which is provided with strips of magnetized material (7); and
- an interface circuit which is connected to the reading elements and which generates as output two or more signals of standard format.

FIG.1

Known identification systems, for instance for protecting access to a room or access to a cash-point machine, usually comprise plastic cards with a magnetizable strip arranged thereon, see for instance Japanese patent publication 63119536.

Information arranged on the magnetizable strip is herein read by means of a reading head which is similar to for instance a reading head in a tape or cassette recorder.

The present invention provides a system for identification comprising:

- a fixedly disposed reading part which is provided with a channel which is open on one side and in which are received reading elements making use of the Hall effect;
- a separate carrier part, the width of which is substantially the same as the width of the channel, which is to be contacted with the channel in a first direction, which is subsequently to be moved along said channel in a second direction substantially perpendicular to said first direction and which is provided with strips of magnetized material; and
- an interface circuit which is connected to the reading elements and which generates as output two or more signals of standard format.

The identification system according to the present invention makes use of Hall elements, whereby the reading part can be manufactured from metal as these Hall elements are sufficiently sensitive to read the information arranged on the carrier, while an interface circuit is also included to enable connection of such identification systems to commercially available computer systems.

An access control system using Hall effect devices is known from US-A-4.112.292, in which a key is inserted in a slot. Such slots are sensitive to malfunction e.g. because of dirt and moisture, as slots in general either need an electric motor for moving a card or key into said slot or complex mechanical means for bringing the car in accurate alignment with reading elements.

Further features, details and advantages of the present invention will be elucidated in the light of the following description of a preferred embodiment thereof with reference to the annexed drawing, wherein:

Fig. 1 shows a partly broken away view in perspective of a preferred embodiment of the present invention; and

Fig. 2 shows a block diagram forming part of the preferred embodiment shown in fig. 1.

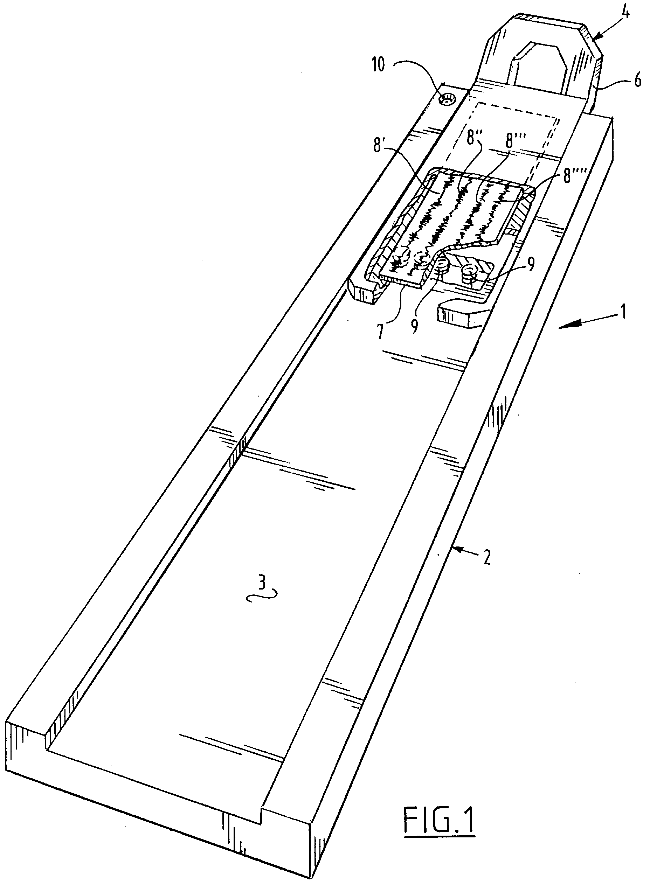

A system for identification 1 (fig. 1) comprises a reading part 2, preferably of metal, in which a channel 3 is arranged along which a carrier part 4 is movable. The carrier part 4 is preferably provided with a bent end portion 6 provided with an eye so that the carrier part 4 can easily be attached to a key ring. Received in the carrier part 4 is a plate of magnetizable material 7 wherein a series of binary information is stored in four parallel tracks 8, 8', 8'', 8'''. When the carrier 4 is moved through the channel 3 this information is read using reading elements 9 shown only schematically and making use of the Hall effect.

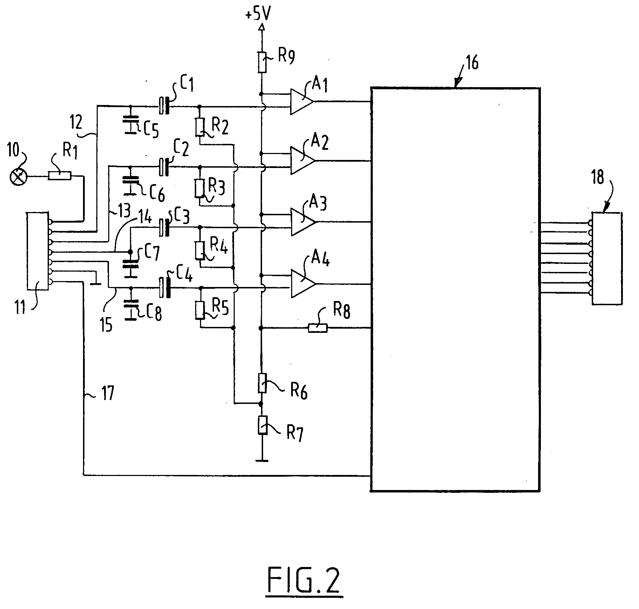

The Hall elements 9 in addition to a lamp in the form of a LED 10 are connected to a connector 11 (see fig. 2). The LED 10 is connected via a resistance $R_1$ to the connector. Four outputs 12, 13, 14 and 15 are further connected via capacitors $C_1$, $C_2$, $C_3$ and $C_4$ and comparators $A_1$, $A_2$, $A_3$ and $A_4$ to a microprocessor part 16 of the interface circuit. Decoupling capacitors $C_5$, $C_6$, $C_7$ and $C_7$ are further connected to the lines 12, 13, 14 and 15 respectively in addition to bias resistors $R_2$, $R_3$, $R_4$, $R_5$, $R_6$, $R_7$, $R_8$ and $R_9$. The microprocessor part is further provided with a feed circuit for supplying a voltage of about 8 volts via a line 17 to the connector 11. The outputs of the Hall elements supply, if the reading part is made of metal, a voltage value of for instance 800 mVolt in block form, wherein the size of the block is dependent on the speed of the movement of the carrier through the channel.

In the microprocessor part the signals from the comparators $A_1$-$A_4$ are scanned and converted into signals of constant frequency standardized for computer applications, which signals can be picked up via a connector 18.

Each of the strips 8-8''' contains for example 12 parts which may or may not be magnetized so that 48 bits of information are available on a carrier part.

As the microprocessor can be programmed to the wishes of the user of an identification system, the system according to the present invention is very versatile. In most cases, identification will be executed according to a coding/decoding system from the applicant, after which the code is converted to a digital code suited for a computer system used by the customer of the applicant or his licensee. A standard format often used by industry is the so-called Wiegand 30 bit format. This format makes use of open collector outputs, either binary '1' or '0', having 28 data bits, preceded by a parity bit for the first 14 data bit and followed by a parity bit for the last 14 data bit.

The present invention is of course not limited to the embodiment shown and described, the rights being defined by the following claims.

## Claims

1.  A system for identification comprising:
    - a fixedly disposed reading part which is provided with a channel which is open on one side and in which are received reading elements making use of the Hall effect;

- a separate carrier part, the width of which is substantially the same as the width of the channel, which is to be contacted with the channel in a first direction, which is subsequently to be moved along said channel in a second direction substantially perpendicular to said first direction and which is provided with strips of magnetized material; and

- an interface circuit which is connected to the reading elements and which generates as output two or more signals of standard format.

2. An identification system as claimed in claim 1, wherein the interface circuit has an RS 232 output.

3. An identification system as claimed in claim 1 or 2, wherein the interface circuit has an RS 422 output.

4. An identification system as claimed in claim 1, 2 or 3, wherein the interface circuit has an open collector output.

5. An identification system according to claim 1, which said standard format is Wiegand 30 bit format.

6. An identification system according to claim 5, in which said 30 bit comprise 28 data bit and 2 parity bits.

7. An identification system according to anyone of the preceding claims wherein the interface circuit is loaded with data for recognizing the data content of said strips of magnetized material to be identified.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | US-A-4 112 292 (VARVEL ET AL.) | 1,7 | G08B15/00 |
| Y | * column 4, line 5 - column 7, line 33 * | 2-6 | G06K7/08 |
| | --- | | |
| X | US-A-4 213 039 (SCHASSER) | 1,7 | |
| | * column 2, line 4 - column 3, line 29 * | | |
| | --- | | |
| X | PATENT ABSTRACTS OF JAPAN | 1 | |
| | vol. 7, no. 54 (P-180)(1199) 4 March 1983 | | |
| | & JP-A-57 200 975 ( HITACHI SEISAKUSHO K.K. ) 9 | | |
| | December  1982 | | |
| | * abstract * | | |
| | --- | | |
| Y | PATENT ABSTRACTS OF JAPAN | 2-4 | |
| | vol. 14, no. 72 (P-1004)(4015) 9 February 1990 | | |
| | & JP-A-1 288 978 ( MATSUSHITA ELECTRIC IND. CO., | | |
| | LTD ) 21 November 1989 | | |
| | * abstract * | | |
| | --- | | |
| Y | US-A-4 593 209 (SLOAN) | 5,6 | |
| | * the whole document * | | |
| | | | TECHNICAL FIELDS SEARCHED (Int. Cl.5 ) |
| | ----- | | |
| | | | G06K |

The present search report has been drawn up for all claims

| Place of search | Date of completion of the search | Examiner |
|---|---|---|
| THE HAGUE | 16 JUNE 1992 | GOOSSENS A.M.J. |

EPO FORM 1503 03.82 (P0401)